# FASCICULE DE BREVET EUROPEEN

(11) **EP 3 016 898 B1**
(45) Date de publication et mention de la délivrance du brevet: **15.03.2017**
(21) Numéro de dépôt: 14733086.4
(22) Date de dépôt: 20.06.2014
(51) Int. Cl.: B65H 23/06, F16D 55/38, F16D 55/40, F16D 65/18, F16D 121/06

(54) **DISPOSITIF DE FREINAGE D'UNE BOBINE DE BANDE**
BREMSVORRICHTUNG EINER BAHNROLLE
DEVICE FOR BRAKING A WEB REEL

(30) Priorité: 01.07.2013 EP 13003323
(43) Date de publication de la demande: 11.05.2016
(73) Titulaire: BOBST MEX SA, 1031 Mex (CH)
(72) Inventeur: CHRETIEN, Julien, F-25370 Métabief (FR); DE GAILLANDE, Christophe, 1808 Les Monts-de-Corsier /VD (CH)
(74) Mandataire: Leadbetter, Benedict
(86) Numéro de dépôt international: PCT/EP2014/001690
(87) Numéro de publication internationale: WO 2015/000558

(56) Documents cités:
- EP-A1- 0 236 702
- EP-A1- 0 790 209
- EP-A1- 1 004 528
- US-A1- 2008 185 239

## Description

La présente invention concerne un dispositif permettant de freiner la rotation d'une bobine de bande montée rotative, en vue notamment de ralentir ou de stopper son dévidement.

L'invention trouve une application particulièrement avantageuse, mais non exclusive, dans le domaine de la fabrication des emballages destinés à l'industrie du luxe.

Il est connu d'imprimer des textes et/ou des motifs par estampage, c'est-à-dire de déposer par pression sur un support en forme de feuille, de la pellicule colorée ou métallisée issue d'une ou plusieurs bandes à estamper communément appelées bandes métallisées. Dans l'industrie, une telle opération de transfert est traditionnellement réalisée au moyen d'une presse à platine dans laquelle les supports d'impression sont introduits feuille à feuille, tandis que chaque bande à estamper est amenée de façon continue.

Chaque bande à estamper est conditionnée sous la forme d'une bobine qui est montée mobile en rotation sur elle-même, et qui est dévidée par l'intermédiaire d'un arbre d'avance tirant directement sur la bande. En pratique, cet arbre d'avance est voué à tourner à vitesse variable étant donné que l'avance de bande s'opère de façon séquentielle au sein de la presse à platine. Mais comme la bobine présente une masse et donc une inertie relativement importante, il s'avère particulièrement difficile pour elle de suivre une telle succession d'accélérations, de décélérations et de temporisations.

### Etat de la technique

Pour remédier à cette difficulté, on a pensé à dissocier la rotation de la bobine de celle de l'arbre d'avance, en constituant une réserve de bande entre ces deux organes rotatifs. Pour cela, on utilise habituellement un système de déroulage de bande qui est capable à la fois, d'accumuler de la bande sous une forme pré-déroulée en aval de la bobine, et de délivrer une juste longueur de bande pré-déroulée à chaque sollicitation de l'arbre d'avance. La présence d'une telle réserve de bande en position intercalée permet alors avantageusement de dévider la bobine à vitesse sensiblement constante, tout en laissant fonctionner l'arbre d'avance à vitesse variable. Les documents de brevets WO 2012/116781 et EP 0987205 divulguent de tels systèmes de déroulage de bandes. EP 0 790 209 A divulgue un dispositif de freinage pour une bobine de bande montée rotative autour de son axe selon le préambule de la revendication 1.

Dans ce type de configuration, la bobine n'est généralement pas laissée libre en rotation. Pour garantir une tension de bande optimale, la bobine est en effet freinée de façon permanente en lui appliquant un couple de freinage dont l'intensité est régulièrement abaissée au fur et à mesure du dévidage. Parmi les dispositifs de freinage connus de l'état de la technique, on distingue ceux qui remplissent leur fonction en serrant la bobine montée rotative, entre deux flasques qui sont fixes en rotation mais qui viennent en pression contre les flancs de la bobine.

Ce type de dispositif de freinage présente toutefois l'inconvénient d'abimer les bords de la bande, du fait que le freinage s'opère par friction directe entre les flasques et les flancs de la bobine. Il s'avère en outre peu précis pour générer la tension de bande voulue, étant donné que le freinage résulte des frottements entre les flasques et les flancs de la bobine, mais que les bords de la bande ne sont pas forcément réguliers.

Pour pallier tous ces problèmes, on a pensé à réaliser la fonction de freinage directement au niveau du tube support autour duquel est enroulée la bande. On utilise pour cela deux manchons qui sont insérés aux extrémités du tube en question, et qui sont par ailleurs montés rotatifs par rapport à un support fixe. Le freinage proprement dit est généré au moyen de plusieurs disques de frictions dont une partie est solidaire d'un des manchons, tandis que l'autre partie est solidaire du support bobine. Une molette de réglage est prévue pour mettre les différents disques de friction plus ou moins en pression entre eux.

Ce genre de dispositif de freinage offre malheureusement un champ d'application relativement restreint. Il s'avère en effet mal adapté pour générer un fort couple de freinage, tel que celui nécessaire pour stopper la rotation de la bobine en cas d'arrêt d'urgence. En fait, il n'est véritablement utilisable que pour produire de faibles couples de freinage, c'est-à-dire uniquement pour effectuer de la tension de bande, qui plus est sur des bobines de tailles et/ou de masses relativement modérées. Enfin, un tel dispositif de freinage requiert des réglages réguliers afin de pouvoir moduler le couple de freinage en fonction de l'inertie réelle de la bobine, inertie qui tend naturellement à décroître au fur et à mesure que la bobine se dévide.

### Exposé de l'invention

Le problème technique à résoudre par l'objet de la présente invention, est de proposer un dispositif de freinage d'une bobine de bande montée rotative autour de son axe, dispositif qui permet d'éviter les problèmes de l'état de la technique en offrant des performances sensiblement améliorées tant en terme de précision que de plage d'utilisation, tout en préservant l'intégrité de la bande.

La solution au problème technique posé consiste, selon la présente invention, en ce que le dispositif de freinage comporte deux organes rotatifs destinés à être couplés en rotation avec la bobine, ainsi qu'un organe de sélection apte à coopérer par friction de façon sélective soit avec l'un, soit avec l'autre des organes rotatifs.

Il est important de préciser ici que dans l'ensemble de ce texte, le terme organe peut désigner aussi bien un simple élément qui est utilisé seul pour exercer une action et/ou remplir une fonction donnée, comme par exemple un disque de frein à disque, qu'un ensemble complexe composé de plusieurs éléments qui agissent ensemble en vue d'exercer une action commune et/ou de réaliser une même fonction, telle une série de disques d'embrayage d'un système multidisque. Cette remarque vaut aussi bien pour l'organe de sélection que pour chaque organe rotatif, mais aussi pour l'organe de friction complémentaire qui sera décrit plus tard.

Par ailleurs, le fait que l'organe de sélection soit capable de coopérer par friction avec chaque organe rotatif, signifie d'une part qu'il est monté fixe en rotation par rapport à chacun d'entre eux au moins lorsque le contact est effectif, et d'autre part qu'il est aussi en mesure d'être maintenu à distance des organes rotatifs de façon à ne coopérer par friction ni avec l'un ni avec l'autre.

L'invention telle qu'ainsi définie présente l'avantage de proposer deux capacités de freinage distinctes au sein d'un même dispositif. Il est dès lors possible de définir deux niveaux de freinage différents, afin de pouvoir répondre efficacement à des situations de fonctionnement tout à fait dissemblables. On peut ainsi concevoir un dispositif de freinage qui est à la fois en mesure de produire avec précision de faibles couples de freinage, et à même de générer avec promptitude des couples de freinage élevés.

En pratique, les deux freins ne seront jamais utilisés simultanément, mais toujours de façon séparée en fonction du type de ralentissement souhaité. C'est ainsi que l'on pourra par exemple mettre en oeuvre l'un des freins pour ralentir la rotation de la bobine de façon continue en vue de contrôler la tension de bande, et l'autre frein pour stopper brusquement la rotation afin de déclencher un arrêt de production préalablement à un changement de bobine, ou un arrêt d'urgence suite à un problème technique.

### Brève description des dessins

La présente invention concerne en outre les caractéristiques qui ressortiront de la description qui va suivre, et qui devront être considérées isolément ou selon toutes leurs combinaisons techniques possibles. Cette description, donnée à titre d'exemple non limitatif, est destinée à mieux faire comprendre en quoi consiste l'invention et comment elle peut être réalisée. La description est par ailleurs donnée en référence aux dessins annexés dans lesquels:
- la Figure 1 représente une armoire porte-bobines dont deux emplacements sont équipés de dispositifs de freinage conformes à l'invention;
- la Figure 2 est une vue isométrique d'un des dispositifs de freinage;
- la Figure 3 montre le dispositif de freinage en coupe simplifiée, c'est-à-dire sans arrière-plan;
- la Figure 4 fait apparaître la structure interne du dispositif de freinage, en vue isométrique et coupe partielle; et
- les Figures 5 à 7 illustrent de façon schématique la cinématique de fonctionnement du dispositif de freinage.

### Exposé détaillé des formes de réalisation préférées

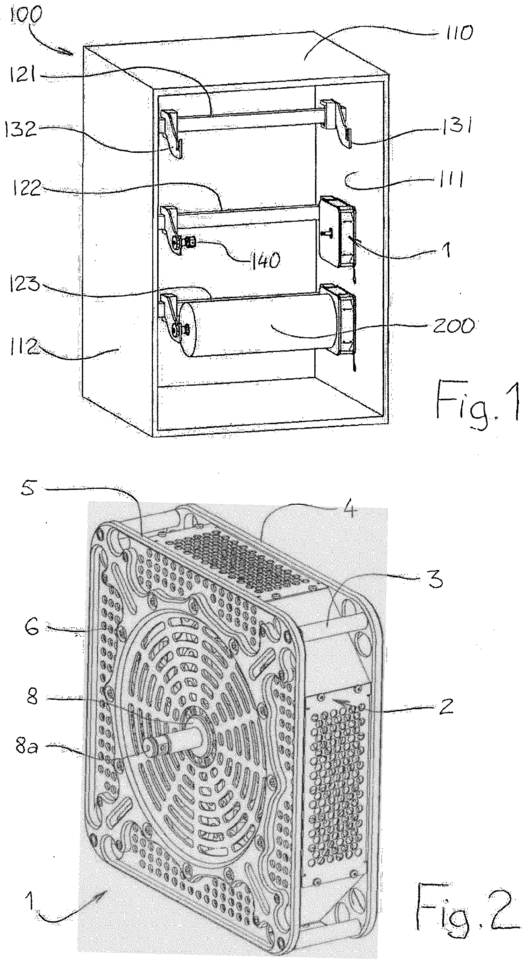

La Fig. 1 représente un module porte-bobines 100 qui est destinée à équiper une machine d'impression par estampage, c'est-à-dire une machine chargée de déposer par pression sur une succession de supports en forme de feuilles, de la pellicule colorée ou métallisée issue d'une ou plusieurs bandes à estamper. Comme son nom l'indique, ce module 100 a pour fonction de supporter les différentes bobines 200 qui servent à alimenter la machine en bandes à estamper.

Le module porte-bobines 100 se présente sous la forme d'un bâti 110 dans lequel sont ménagés trois emplacements pouvant recevoir chacun une ou plusieurs bobines de bandes 200. Chaque emplacement est matérialisé par une traverse 121, 122, 123 qui est fixée horizontalement entre les parois latérales 111, 112 du bâti 110, et qui sert de support d'ancrage à au moins une paire de bras porte-bobine 131, 132. Ces différents bras porte-bobine 131, 132 sont montés coulissants le long de leurs traverses respectives 121, 122, 123, afin de pouvoir être déplacés transversalement et ainsi pouvoir s'adapter à la position transversale ainsi qu'à la laize des bobines 200 qui leur sont associées.

Le module porte-bobines 100 est en outre équipée de dispositifs de freinage 1 qui sont chacun voués à freiner la rotation d'une bobine de bande 200 montée rotative autour de son axe, en vue de contrôler son dévidage pendant les différentes phases de fonctionnement de la machine d'estampage. Dans l'exemple d'agencement illustré à la Fig. 1, seuls les emplacements intermédiaire et inférieur dispose d'un tel dispositif de freinage 1, alors que l'emplacement supérieur en est dépourvu.

Comme on peut le voir au niveau de l'emplacement intermédiaire, chaque dispositif de freinage 1 est fixé à l'extrémité libre d'un des bras porte-bobine 131, tandis que l'autre bras 132 soutient simplement un support 140 monté rotatif. De manière avantageuse, les deux dispositifs de freinage 1 présents sont positionnés du même côté du module 100, afin d'être placés au plus près d'une source d'air comprimé (non visible) qui est nécessaire à leurs fonctionnements respectifs et qui est commune.

Pour qu'un dispositif de freinage 1 soit en mesure de remplir sa fonction, il faut qu'il soit couplé en rotation avec la bobine 200 conformément à ce qui est visible au niveau de l'emplacement inférieur du module porte-bobines 100. Concrètement, la bobine 200 est montée rotative entre les deux bras porte-bobine 131, 132, par emmanchement de ses deux extrémités avec une partie mobile du dispositif de freinage 1 d'une part, et avec le support rotatif 140 d'autre part.

Le Fig. 2 montre que dans ce mode particulier de réalisation, choisi uniquement à titre d'exemple, chaque dispositif de freinage 1 est délimité extérieurement par un bâti 2 de forme sensiblement parallélépipédique, ce qui lui permet d'offrir une assise stable lorsqu'il n'est pas monté mais simplement posé sur une surface plane. Le dispositif de freinage 1 dispose par ailleurs de poignées de préhension 3 qui sont implantées aux quatre coins du bâti 2, afin de faciliter sa manipulation lorsqu'il n'est pas fixé à l'extrémité libre d'un bras porte-bobine 131.

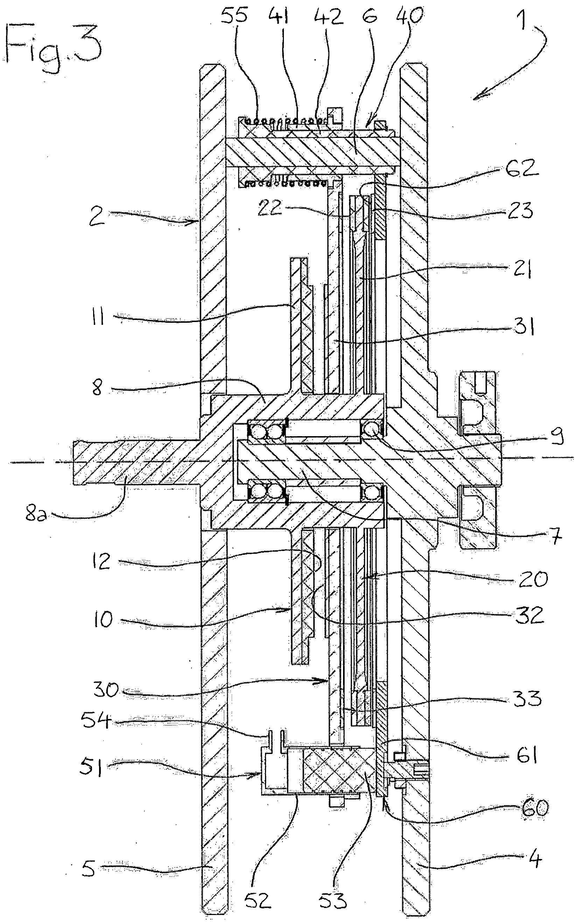

Ainsi qu'on peut le voir plus clairement sur la Fig. 3, le bâti 2 est composé de deux flancs 4, 5 qui sont reliés rigidement entre eux par douze entretoises 6 réparties en cercle (Fig. 2), ainsi que par les quatre poignées 3 précédemment évoquées. Le tout forme une structure parfaitement rigide qui constitue l'essentiel de la partie statique du dispositif de freinage 1, c'est-à-dire la partie destinée à être solidarisée rigidement au bras porte-bobine 131.

Le flanc 4, qui est voué à être placé à proximité du bras porte-bobine 131, est pourvu en son centre d'une portion saillante qui s'étend perpendiculairement à l'intérieur du bâti 2, de manière à former un moyeu 7 à même de supporter la partie mobile du dispositif de freinage 1. Le flanc opposé 5, qui va être amené à s'étendre face à la bobine 200, est quant à lui ajouré dans sa zone centrale afin que la partie mobile du dispositif de freinage 1 soit accessible depuis l'extérieur malgré le fait qu'elle est presque complètement intégrée à l'intérieur du bâti 2.

Cette partie mobile du dispositif de freinage 1, c'est-à-dire celle qui est destinée à être couplée en rotation avec la bobine 200, comprend un rotor 8 qui est monté mobile en rotation autour du moyeu 7, par l'intermédiaire de plusieurs roulements à billes 9. L'ensemble est agencé de manière à ce que l'extrémité distale 8a du rotor 8 dépasse significativement du bâti 2. Elle est alors en mesure, soit de servir directement de support pour toute bobine 200 de section interne sensiblement complémentaire, soit de recevoir un manchon de section supérieure et ainsi de servir indirectement de support à toute bobine 200 de section interne plus importante.

Conformément à l'objet de la présente invention, le dispositif de freinage 1 est doté de deux organes rotatifs 10, 20 qui sont destinés à être couplés en rotation avec la bobine 200, suivant l'axe de rotation de cette dernière. Mais le dispositif de freinage est également pourvu d'un organe de sélection 30 qui est monté fixe en rotation par rapport aux deux organes rotatifs 10, 20, et qui est en mesure de coopérer par friction de façon sélective soit avec l'un, soit avec l'autre des organes rotatifs 10, 20.

Comme son nom l'indique, c'est l'organe de sélection 30 qui sert à activer ou non la fonction freinage, et le cas échéant à choisir entre les deux types de frein disponibles. Chaque organe rotatif 10, 20 définit quant à lui la capacité de freinage de chaque type de frein; capacité qui est notamment fonction du nombre, de la taille, de la position et/ou de la structure des différentes surfaces de frottement mises en jeu. Dans cet exemple de réalisation, l'organe rotatif 10 correspond à un frein de ralentissement à même de ralentir continuellement la rotation de la bobine 200 afin de générer une tension de bande optimale, tandis que l'organe rotatif 20 correspond à un frein d'arrêt capable de stopper brusquement la rotation en cas notamment d'arrêt de production ou d'arrêt d'urgence.

Dans le détail, chaque organe rotatif 10, 20 se présente sensiblement sous la forme d'un disque 11, 21, c'est-à-dire d'un élément plat et circulaire qui monté mobile en rotation par rapport à un axe central, et qui porte selon le cas une ou deux surfaces de frottement 12, 22, 23 annulaires. En ce sens, chaque organe rotatif 10, 20 s'avère assez semblable à un disque de frein de véhicule automobile. Les deux organes rotatifs 10, 20 sont ici montés solidaires en rotation puisque les deux disques 11, 21 sont directement solidaires du rotor 8. Ils sont par ailleurs disposés parallèlement l'un à l'autre dans des plans qui sont perpendiculaires à l'axe de rotation de la bobine 200.

Bien qu'il s'apparente lui aussi à un disque 31, l'organe de sélection 30 présente une forme qui est davantage annulaire, étant donné qu'il n'est pas relié à un élément central mais à une portion relativement périphérique du bâti 2. Dans son environnement direct, l'organe de sélection 30 se trouve placé entre les deux organes rotatifs 10, 20, et il s'étend perpendiculairement à l'axe de rotation de la bobine 200 de sorte se que ses surfaces de frottement 32, 33 se positionnent directement en regard de celles 12, 22 des deux organes rotatifs 10, 20. L'organe de sélection 30 est par ailleurs monté fixe en rotation par rapport aux deux organes rotatifs 10, 20.

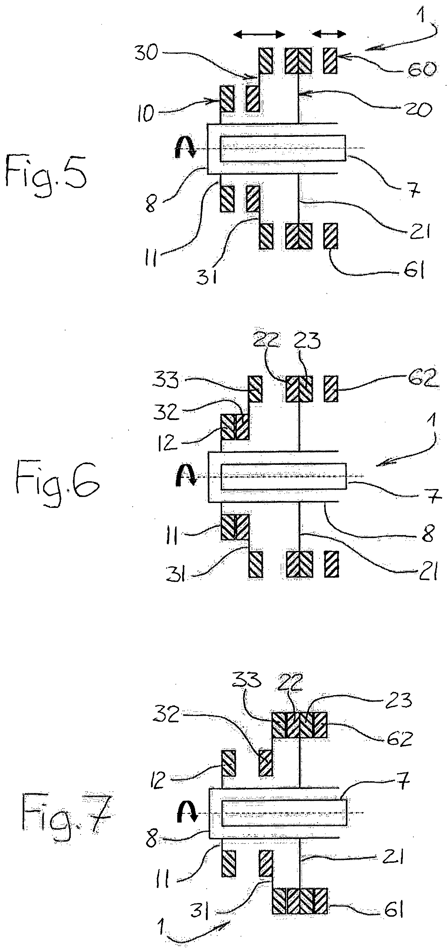

Ainsi que l'illustrent les trois schémas de principe des Figs. 5 à 7, l'organe de sélection 30 est toutefois monté mobile en déplacement, d'une part, entre une position passive dans laquelle il est placé à distance de tout organe rotatif 10, 20 (Fig. 5), et une première position active dans laquelle il coopère par friction avec un des deux organes rotatifs 10 (Fig. 6), ainsi que d'autre part, entre la position passive (Fig. 5) et une seconde position active dans laquelle il coopère par friction avec l'autre organe rotatif 20 (Fig. 7). Aussi bien le mouvement que la trajectoire de déplacement de l'organe de sélection 30 peuvent à priori être quelconque.

Cependant, et de manière particulièrement avantageuse, l'organe de sélection 30 est ici disposé entre les deux organes rotatifs 10, 20, et il est par ailleurs monté mobile en translation parallèlement à l'axe de rotation des organes rotatifs 10, 20. L'implantation de l'organe de sélection 30 en position intercalée permet de minimiser l'encombrement du dispositif de freinage 1, tandis que sa mobilité s'avère particulièrement facile à mettre en oeuvre compte tenu du fait qu'une translation linéaire ou curviligne constitue un mouvement de déplacement relativement simple à guider.

D'ailleurs et conformément à une autre caractéristique avantageuse, le dispositif de freinage 1 comprend des moyens de guidage 40 qui sont chargés de guider le déplacement de l'organe de sélection 30 entre la position passive et chaque position active, c'est-à-dire d'une part entre la position passive et la première position active, et d'autre part entre la position passive et la seconde position active.

En pratique, le déplacement de l'organe de sélection 30 s'opère ici par coulissement suivant une trajectoire purement linéaire qui est parfaitement parallèle à l'axe de rotation des organes rotatifs 10, 20. Pour cela, les moyens de guidage 40 comprennent une série de contre-douilles 41 qui sont solidarisées sur tout le pourtour externe du disque 31, et qui sont montées coulissantes par rapport à des douilles 42 qui sont elles-mêmes capables de coulisser le long des entretoises 6 du bâti 2.

Selon une particularité de l'invention, le dispositif de freinage 1 comporte également des moyens moteurs 50 qui sont à même de déplacer l'organe de sélection 30 entre la position passive et chaque position active. L'intérêt de mécaniser le déplacement de l'organe de sélection 30 est de pouvoir automatiser le fonctionnement du dispositif de freinage 1.

De manière particulièrement avantageuse, les moyens moteurs 50 sont en outre en mesure de pousser l'organe de sélection 30 contre chaque organe rotatif 10, 20 avec une pression variable. Cette caractéristique permet de moduler le couple de freinage pour chaque type de frein disponible, afin par exemple de contrôler plus finement la tension de bande dans le cas du frein de ralentissement, ou d'apporter une certaine dose de la progressivité dans le cas d'un frein d'arrêt.

Dans cet exemple de réalisation, les moyens moteurs 50 associent plusieurs vérins pneumatiques 51 chargés d'entraîner en déplacement l'organe de sélection 30 vers l'organe rotatif 10, à toute une série de ressorts de rappel 55 dont l'action commune tend en permanence à entraîner l'organe de sélection 30 vers l'organe rotatif 20.

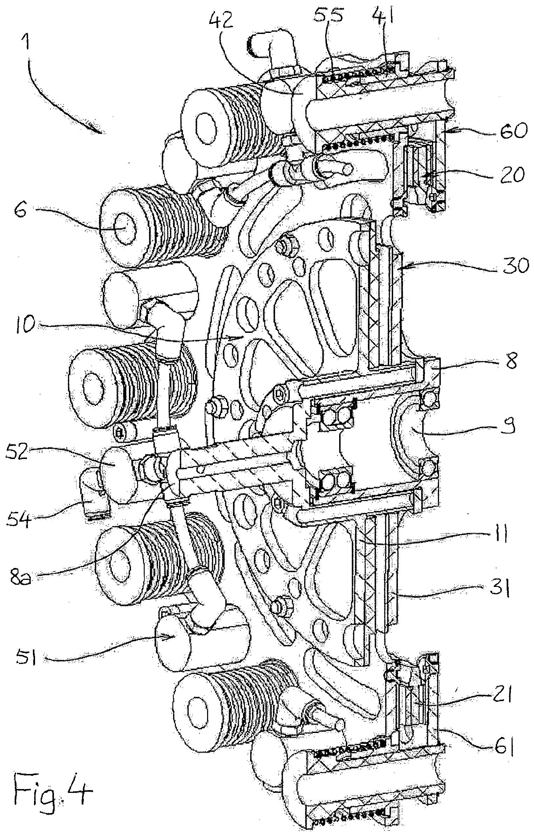

Concrètement, les différents vérins 51 sont solidarisés par l'intermédiaire de leurs corps 52 sur tout le pourtour externe du disque 31, de façon alternée par rapport aux entretoises 6 (Fig. 4). Les tiges télescopiques 53 de ces vérins 51 sont positionnées de manière à pouvoir à prendre appui sur un élément fixe en rotation, en l'occurrence un organe de friction complémentaire 60 qui sera décrit plus tard. Tous les vérins 51 sont par ailleurs reliés à une source d'air comprimée commune via leurs embouts 54.

Les ressorts de rappel 55 sont eux aussi répartis sur le pourtour externe du disque 31, dans la mesure où chacun d'entre eux est implanté autour d'une des entretoises 6 du bâti 2. Travaillant en compression, chaque ressort de rappel 55 exerce une action répulsive entre la douille 42 qui est solidaire de l'organe de friction complémentaire 60 et la contre-douille 41 qui est solidaire de l'organe rotatif 30; sachant que la douille 42 est montée coulissante par rapport à la contre-douille 41 qui est elle-même montée coulissante le long de l'entretoise 6.

L'ensemble est agencé de telle sorte que le déploiement simultané des vérins 51 entraîne la mise en appui des différentes tiges télescopiques 53 contre l'organe de friction complémentaire 60 puis le coulissement des contre-douilles 41le long des douilles 42, et conséquemment la translation du disque 31 vers le disque 10. A contrario, la rétractation concomitante des différents vérins 51 va libérer l'action des ressorts de rappels 55, ce qui va entraîner le coulissement en sens contraire des contre-douilles 41le long des douilles 42, et donc le déplacement du disque 31 vers le disque 20.

Selon une autre particularité de l'invention, qui est clairement visible sur les Figs. 5 et 7, le dispositif de freinage 1 est en outre doté d'un organe de friction complémentaire 60 qui est à même de coopérer par friction avec l'organe rotatif 20 lorsque l'organe de sélection 30 vient lui aussi coopérer par friction avec ce même organe rotatif 20 (Fig. 7). La mise en oeuvre de l'organe de friction complémentaire 60 est sensiblement concomitante à celle de l'organe de sélection 30. Leurs actions respectives peuvent ainsi se cumuler, ce qui permet d'accroître significativement la puissance de freinage. L'utilisation d'un organe de friction complémentaire 60 s'avère par conséquent davantage adaptée à un frein d'urgence qu'à un frein de ralentissement.

Un dispositif de freinage 1 conforme à l'invention peut être doté de plusieurs organes de friction complémentaires 60, sachant qu'il est parfaitement envisageable que plusieurs organes de friction complémentaires 60 coopèrent simultanément avec un même organe rotatif 10, 20, ou qu'un même organe de friction complémentaire 60 coopère sélectivement avec l'un ou l'autre des organes rotatifs 10, 20.

Dans ce mode particulier de réalisation, l'organe de friction complémentaire 60 est disposé en regard de l'organe rotatif 20 auquel il est associé, et il est monté mobile en translation parallèlement à l'axe de rotation de l'organe rotatif 20 (Fig. 5). Cette mobilité s'exerce entre une position passive dans laquelle l'organe de friction complémentaire 60 se tient à distance de l'organe rotatif 20 (Figs. 5 et 6), et une position active dans laquelle il coopère par friction avec l'organe rotatif 20 (Fig. 7).

De manière particulièrement avantageuse, l'ensemble est agencé de manière à ce qu'en position active, l'organe de friction complémentaire 60 et l'organe de sélection 30 coopèrent par friction avec l'organe rotatif 20, au niveau respectivement de deux faces 22, 23 qui sont sensiblement opposées. L'intérêt d'une telle configuration est de répartir les pressions de freinage de part et d'autre de l'organe rotatif 20. Cela permet d'améliorer significativement l'efficacité du freinage, et ce d'autant plus que les couples atteints sont relativement élevés dans le cas d'un frein d'arrêt.

Dans cet exemple de réalisation, l'organe de friction complémentaire 60 se présente sous la forme d'un disque 61 qui est monté fixe en rotation par rapport à l'organe rotatif 20, mais qui monté mobile en translation parallèlement à l'axe de rotation de l'organe rotatif 20 (Fig. 5). Cette mobilité en translation est guidée par l'intermédiaire des douilles 42 qui sont fixées au niveau de son pourtour externe, et qui sont à même de coulisser le long des entretoises 6 du bâti 2.

Conformément à une autre caractéristique avantageuse, le dispositif de freinage 1 est par ailleurs pourvu de moyens de couplage qui sont en mesure d'entraîner l'organe de friction complémentaire 60 en déplacement entre sa position passive à sa position active, lorsque l'organe de sélection 30 est déplacé entre sa position passive et sa position active.

Dans cet exemple de réalisation, ce sont les moyens moteurs 50 qui jouent le rôle de moyens de couplage. Le déplacement du disque 61 est en effet directement lié à celui du disque 31 compte tenu du fait que les vérins 51 qui sont solidaires du disque 31, prennent appui contre le disque 61, tandis que les ressorts de compression 55 exercent leur action entre les douilles 42 qui sont solidaires du disque 61, et les contre-douilles 41 qui sont solidaires du disque 31

En position passive, le disque 61 est maintenu à distance du disque 30 par les vérins 51 en position déployée. La rétractation progressive des vérins 51 va libérer tout aussi graduellement l'action des ressorts de rappel 55, entraînant de ce fait le déplacement du disque 61 vers sa position active. Une fois cette dernière atteinte, le disque 61 est maintenu au contact du disque 31 par les seuls ressorts de rappel 55; les vérins 51 pouvant toutefois être activés légèrement pour moduler la pression exercée. Le retour du disque 61 en position passive va quant à lui s'opérer en annihilant progressivement l'action des ressorts de rappel 55, grâce à un déploiement graduel des vérins 51.

De préférence, chaque organe rotatif 10, 20, l'organe de sélection 30, et le cas échéant chaque organe de friction complémentaire 60 coopèrent par friction par l'intermédiaire de surfaces de frottement 12, 22, 23, 32, 33, 62 qui s'étendent dans des plans sensiblement perpendiculaires à l'axe de rotation des organes rotatifs 10, 20.

Par ailleurs, les surfaces de frottement respectives 12, 22, 23, 32, 33, 62 de chaque organe rotatif 10, 20, de l'organe de sélection 30 et le cas échéant de chaque organe de friction complémentaire 60, présentent des formes sensiblement annulaires. Cette caractéristique permet de maximiser les surfaces de frottement 12, 22, 23, 32, 33, 62 mises en jeu et donc d'optimiser le freinage, sachant que toutes les frictions sont générées à partir de mouvements relatifs de type rotation.

L'invention concerne également tout module porte bobine 100 chargé de supporter au moins une bobine de bande 200 et comprenant au moins un dispositif de freinage 1 tel que précédemment décrit.

Mais plus largement encore, l'invention est par ailleurs relative à toute machine d'impression d'une succession d'éléments plats en forme de feuilles, par estampage d'au moins une bande à estamper conditionnée sous forme de bobine, qui comporte au moins un dispositif de freinage 1 tel que précédemment décrit.

## Revendications

1. Dispositif de freinage (1) d'une bobine de bande (200) montée rotative autour de son axe, **caractérisé en ce qu'**il comporte deux organes rotatifs (10, 20) destinés à être couplés en rotation avec la bobine (200), ainsi qu'un organe de sélection (30) apte à coopérer par friction de façon sélective soit avec l'un, soit avec l'autre des organes rotatifs (10, 20).

2. Dispositif selon la revendication 1, **caractérisé en ce que** l'organe de sélection (30) est monté mobile en déplacement, d'une part, entre une position passive dans laquelle il est placé à distance de tout organe rotatif (10, 20), et une première position active dans laquelle il coopère par friction avec un des deux organes rotatifs (10, 20), ainsi que d'autre part, entre la position passive et une seconde position active dans laquelle il coopère par friction avec l'autre organe rotatif (10, 20).

3. Dispositif selon la revendication 2, **caractérisé en ce que** l'organe de sélection (30) est disposé entre les deux organes rotatifs (10, 20), et il est monté mobile en translation parallèlement à l'axe de rotation des organes rotatifs (10, 20).

4. Dispositif selon l'une des revendications 2 ou 3, **caractérisé en ce qu'**il comporte des moyens de guidage (40) aptes à guider le déplacement de l'organe de sélection (30) entre la position passive et chaque position active.

5. Dispositif selon l'une des revendications 2 à 4, **caractérisé en ce qu'**il comporte des moyens moteurs (50) aptes à déplacer l'organe de sélection (30) entre la position passive et chaque position active.

6. Dispositif selon la revendication 5, **caractérisé en ce que** les moyens moteurs (50) sont en outre aptes à pousser l'organe de sélection (30) contre chaque organe rotatif (10, 20) avec une pression variable.

7. Dispositif selon l'une des revendications 1 à 6, **caractérisé en ce qu'**il comporte en outre au moins un organe de friction complémentaire (60) qui est apte à coopérer par friction avec un des organes rotatifs (20) lorsque l'organe de sélection (30) vient lui aussi coopérer par friction avec l'organe rotatif (20).

8. Dispositif selon la revendication 7, **caractérisé en ce que** l'organe de friction complémentaire (60) est disposé en regard de l'organe rotatif (20) auquel il est associé, et il est monté mobile en translation parallèlement à l'axe de rotation de l'organe rotatif (20), entre une position passive dans laquelle il se tient à distance de l'organe rotatif (20), et une position active dans laquelle il coopère par friction avec l'organe rotatif (20).

9. Dispositif selon l'une des revendications 7 ou 8, **caractérisé en ce que** l'organe de friction complémentaire (60) et l'organe de sélection (30) coopèrent par friction avec l'organe rotatif (20), au niveau respectivement de deux faces qui sont sensiblement opposées.

10. Dispositif selon l'une des revendications 7 à 9, **caractérisé en ce qu'**il comporte des moyens de couplage aptes à entraîner l'organe de friction complémentaire (60) en déplacement entre sa position passive à sa position active, lorsque l'organe de sélection (30) est déplacé entre sa position passive et sa position active.

11. Dispositif selon l'une des revendications 1 à 10, **caractérisé en ce que** chaque organe rotatif (10, 20), l'organe de sélection (30) et le cas échéant chaque organe de friction complémentaire (60) coopèrent par friction par l'intermédiaire de surfaces de frottement (12, 22, 23, 32, 33, 62) qui s'étendent dans des plans sensiblement perpendiculaires à l'axe de rotation des organes rotatifs (10, 20).

12. Dispositif selon la revendication 11, **caractérisé en ce que** les surfaces de frottement (12, 22, 23, 32, 33, 62) de chaque organe rotatif (10, 20), de l'organe de sélection (30) et le cas échéant de chaque organe de friction complémentaire (60), présentent des formes sensiblement annulaires.

13. Dispositif selon l'une des revendications 1 à 13, **caractérisé en ce que** les deux organes rotatifs (10, 20) sont montés solidaires en rotation.

14. Module porte bobine (100) chargé de supporter au moins une bobine de bande (200), **caractérisé en ce qu'**il comporte au moins un dispositif de freinage (1) selon l'une des revendications précédentes.

15. Machine d'impression d'une succession d'éléments plats en formé de feuilles, par estampage d'au moins une bande à estamper conditionnée sous forme de bobine (200), **caractérisée en ce qu'**elle comporte au moins un dispositif de freinage (1) selon l'une des revendications 1 à 13.

## Patentansprüche

1. Bremsvorrichtung (1) einer Bandspule (200), die relativ um ihre Achse montiert ist, **dadurch gekennzeichnet, dass** sie zwei Rotationsorgane (10, 20), die dazu bestimmt sind, rotatorisch mit der Spule (200) gekoppelt zu werden, sowie ein Selektionsorgan (30) umfasst, das zum Zusammenwirken mittels Reibung auf selektive Weise entweder mit dem einen oder mit dem anderen der Rotationsorgane (10, 20) geeignet ist.

2. Vorrichtung nach Anspruch 1, **dadurch gekennzeichnet, dass** das Selektionsorgan (30) verschiebungsbeweglich einerseits zwischen einer Passivposition, in welcher es beabstandet von jedem Rotationsorgan (10, 20) angeordnet ist, und einer ersten Aktivposition, in welcher es mittels Reibung mit einem der zwei Rotationsorgane (10, 20) zusammenwirkt, sowie andererseits zwischen der Passivposition und einer zweiten Aktivposition, in welcher es mittels Reibung mit dem anderen Rotationsorgan (10, 20) zusammenwirkt, montiert ist.

3. Vorrichtung nach Anspruch 2, **dadurch gekennzeichnet, dass** das Selektionsorgan (30) zwischen den zwei Rotationsorganen (10, 20) angeordnet ist, und dass es translationsbeweglich parallel zu der Rotationsachse der Rotationsorgane (10, 20) montiert ist.

4. Vorrichtung nach einem der Ansprüche 2 oder 3, **dadurch gekennzeichnet, dass** sie Führungsmittel (40) umfasst, welche dazu geeignet sind, die Verschiebung des Selektionsorgans (30) zwischen der Passivposition und jeder Aktivposition zu führen.

5. Vorrichtung nach einem der Ansprüche 2 bis 4, **dadurch gekennzeichnet, dass** sie Antriebsmittel (50) umfasst, welche dazu geeignet sind, das Selektionsorgan (30) zwischen der Passivposition und jeder Aktivposition zu verschieben.

6. Vorrichtung nach Anspruch 5, **dadurch gekennzeichnet, dass** die Antriebsmittel (50) außerdem dazu geeignet sind, das Selektionsorgan (30) mit einem variablen Druck gegen jedes Rotationsorgan (10, 20) zu schieben.

7. Vorrichtung nach einem der Ansprüche 1 bis 6, **dadurch gekennzeichnet, dass** sie außerdem mindestens ein Komplementär-Reibungsorgan (60) umfasst, welches dazu geeignet ist, mittels Reibung mit einem der Rotationsorgane (20) zusammenzuwirken, wenn das Selektionsorgan (30) selbst ebenfalls mittels Reibung mit dem Rotationsorgan (20) zusammenwirkt.

8. Vorrichtung nach Anspruch 7, **dadurch gekennzeichnet, dass** das Komplementär-Reibungsorgan (60) gegenüber dem Rotationsorgan (20) angeordnet ist, welchem es zugeordnet ist, und dass es translationsbeweglich parallel zu der Rotationsachse des Rotationsorgans (20) montiert ist, und zwar zwischen einer Passivposition, in welcher es einen Abstand von dem Rotationsorgan (20) hält, und einer Aktivposition, in welcher es mittels Reibung mit dem Rotationsorgan (20) zusammenwirkt.

9. Vorrichtung nach einem der Ansprüche 7 oder 8, **dadurch gekennzeichnet, dass** das Komplementär-Reibungsorgan (60) und das Selektionsorgan (30) mittels Reibung mit dem Rotationsorgan (20) auf der jeweiligen Ebene der zwei Seiten zusammenwirken, die ungefähr gegenüberliegen.

10. Vorrichtung nach einem der Ansprüche 7 bis 9, **dadurch gekennzeichnet, dass** sie Kupplungsmittel umfasst, welche dazu geeignet sind, das Komplementär-Reibungsorgan (60) verschieblich zwischen seiner Passivposition und seiner Aktivposition mitzunehmen, wenn das Selektionsorgan (30) zwischen seiner Passivposition und seiner Aktivposition verschoben wird.

11. Vorrichtung nach einem der Ansprüche 1 bis 10, **dadurch gekennzeichnet, dass** jedes Rotationsorgan (10, 20), das Selektionsorgan (30) und gegebenenfalls jedes Komplementär-Reibungsorgan (60) mittels Reibung vermittels Reibungsflächen (12, 22, 23, 32, 33, 62) zusammenwirken, welche in Ebenen verlaufen, die ungefähr senkrecht zu der Rotationsachse der Rotationsorgane (10, 20) sind.

12. Vorrichtung nach Anspruch 11, **dadurch gekennzeichnet, dass** die Reibungsflächen (12, 22, 23, 32, 33, 62) jedes Rotationsorgans (10, 20), des Selektionsorgans (30) und gegebenenfalls jedes Komplementär-Reibungsorgans (60) ungefähr ringförmige Formen aufweisen.

13. Vorrichtung nach einem der Ansprüche 1 bis 13, **dadurch gekennzeichnet, dass** die zwei Rotationsorgane (10, 20) kraftschlüssig rotatorisch montiert sind.

14. Spulenträgermodul (100) zuständig zum Halten von mindestens einer Bandspule (200) **dadurch gekennzeichnet, dass** es mindestens eine Bremsvorrichtung (1) nach einem der vorhergehenden Ansprüche umfasst.

15. Druckmaschine einer Abfolge von flachen Elementen in der Form von Blättern zum Pressen von mindestens einem Prägeband, das in Form einer Spule (200) beschaffen ist, **dadurch gekennzeichnet, dass** sie mindestens eine Bremsvorrichtung (1) nach einem der Ansprüche 1 bis 13 umfasst.

## Claims

1. Device (1) for braking a web reel (200) mounted rotatably about the axis of said reel, **characterised in that** said device comprises two rotary members (10, 20) intended to be rotationally coupled with the reel (200), as well as a selection member (30) suitable for selectively cooperating via friction either with one or with the other of the rotary members (10, 20).

2. Device according to claim 1, **characterised in that** the selection member (30) is mounted in such a way as to be able to move between a passive position in which said member is positioned at a distance from any rotary member (10, 20), and a first active position in which said member cooperates via friction with one of the two rotary members (10, 20), and, between the passive position and a second active position in which said member cooperates via friction with the other rotary member (10, 20).

3. Device according to claim 2, **characterised in that** the selection member (30) is positioned between the two rotary members (10, 20) and is mounted movably in translation parallel to the axis of rotation of the rotary members (10, 20).

4. Device according to any one of claims 2 or 3, **characterised in that** said device comprises guide means (40) suitable for guiding the movement of the selection member (30) between the passive position and each active position.

5. Device according to any one of claims 2 to 4, **characterised in that** said device comprises motor means (50) suitable for moving the selection member (30) between the passive position and each active position.

6. Device according to claim 5, **characterised in that** the motor means (50) are further suitable for pushing the selection member (30) against each rotary member (10, 20) with a variable pressure.

7. Device according to any one of claims 1 to 6, **characterised in that** said device further comprises at least one complementary friction member (60) that is suitable for cooperating via friction with one of the rotary members (20) when the selection member (30) also cooperates via friction with the rotary member (20).

8. Device according to claim 7, **characterised in that** the complementary friction member (60) is positioned facing the rotary member (20) with which said complementary friction member is associated, and said complementary friction member is mounted movably in translation parallel to the axis of rotation of the rotary member (20), between a passive position in which said complementary friction member remains at a distance from the rotary member (20), and an active position in which said complementary friction member cooperates via friction with the rotary member (20).

9. Device according to any one of claims 7 and 8, **characterised in that** the complementary friction member (60) and the selection member (30) cooperate via friction with the rotary member (20) at two faces, respectively, that are substantially opposite.

10. Device according to any one of claims 7 to 9, **characterised in that** said device comprises coupling means suitable for moving the complementary friction member (60) between the passive position of said member to the active position of said member, when the selection member (30) is moved between the passive position of said selection member and the active position of said selection member.

11. Device according to any one of claims 1 to 10, **characterised in that** each rotary member (10, 20), the selection member (30) and, where necessary, each complementary friction member (60) cooperate via friction via friction surfaces (12, 22, 23, 32, 33, 62) that extend in planes substantially perpendicular to the axis of rotation of the rotary members (10,20).

12. Device according to claim 11, **characterised in that** the friction surfaces (12, 22, 23, 32, 33, 62) of each rotary member (10, 20), of the selection member (30) and, where necessary, of each complementary friction member (60) have a substantially annular shape.

13. Device according to any one of claims 1 to 13, **characterised in that** the two rotary members (10, 20) are constrained to rotate together.

14. Reel-carrying module (100) tasked with carrying at least one web reel (200), **characterised in that** said module comprises at least one braking device (1) according to one of the previous claims.

15. Machine for printing a succession of flat elements in the shape of sheets, via stamping of at least one stamping web conditioned in the form of a reel (200), **characterised in that** said machine comprises at least one braking device (1) according to one of claims 1 to 13.
